# EUROPÄISCHE PATENTSCHRIFT

(11) **EP 4 291 868 B1**
(45) Veröffentlichungstag und Bekanntmachung des Hinweises auf die Patenterteilung: **01.04.2026**
(21) Anmeldenummer: 22712492.2
(22) Anmeldetag: 03.02.2022
(51) Int. Cl.: G01N 3/46, G01N 3/56

(54) **PRÜFVORRICHTUNG UND VERFAHREN ZUR PRÜFUNG EINER OBERFLÄCHE EINES PRÜFLINGS**
TESTING DEVICE AND METHOD FOR TESTING A SURFACE OF A TEST OBJECT
DISPOSITIF DE TEST ET PROCÉDÉ DE TEST D'UNE SURFACE D'UN OBJET À TESTER

(30) Priorität: 10.02.2021 DE 102021103160
(43) Veröffentlichungstag der Anmeldung: 20.12.2023
(73) Patentinhaber: Innowep GmbH, 97076 Würzburg (DE)
(72) Erfinder: WEINHOLD, Wolfgang P., 97070 Würzburg (DE)
(74) Vertreter: Riechelmann & Carlsohn Patentanwälte PartG mbB
(86) Internationale Anmeldenummer: PCT/DE2022/100095
(87) Internationale Veröffentlichungsnummer: WO 2022/171248

(56) Entgegenhaltungen:
- KR-B1- 101 157 640
- US-A1- 2005 081 599
- US-A1- 2014 090 445
- US-A1- 2019 003 946

## Beschreibung

Die Erfindung betrifft eine Prüfvorrichtung zur Prüfung einer Oberfläche eines Prüflings. Sie betrifft ferner ein Verfahren zur Prüfung einer Oberfläche eines Prüflings mittels der Prüfvorrichtung.

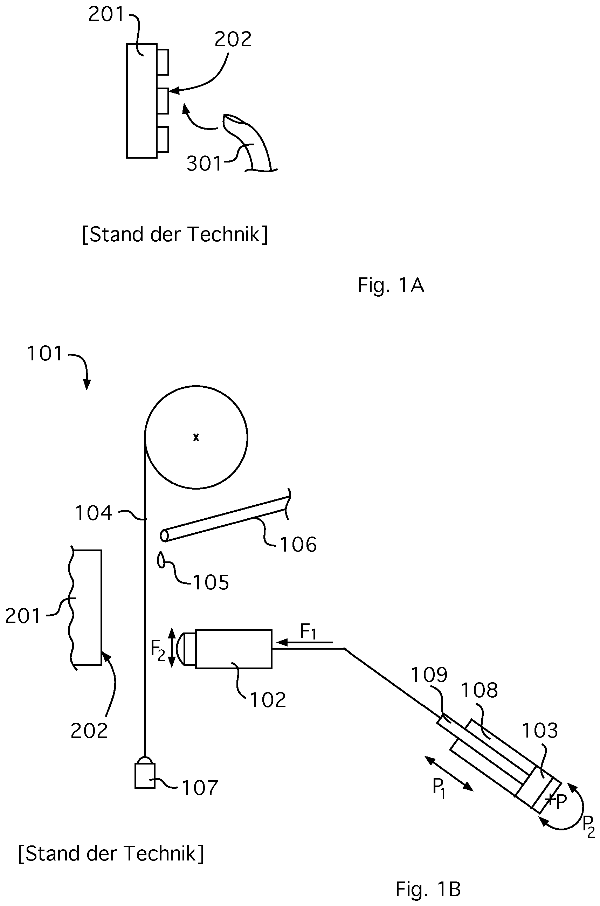

Der vom Menschen verursachte, soft-chemomechanische Finger- bzw. Handabrieb einer Oberfläche 202 (siehe Fig. 1A, in der Bezugszeichen 301 einen Finger bezeichnet, der in der durch den Pfeil gekennzeichneten Weise auf die Oberfläche 202 einwirkt) kann mithilfe von Prüfgeräten simuliert und realitätsnah nachgebildet werden. Aus dem Stand der Technik bekannte Prüfvorrichtungen orientieren sich in ihrem Aufbau an der Norm DIN EN ISO 60068-2-70 :1996-07. Fig. 1B zeigt eine schematische Darstellung eines Prüfgerätes 101, das nach dem Stand der Technik zur Abriebprüfung eines Prüflings 201, der eine zu prüfende Oberfläche 202 aufweist, eingesetzt werden kann. Die zu prüfende Oberfläche 202 des Prüflings 201 wird im Folgenden auch als Prüfoberfläche 202 bezeichnet.

Die Abriebprüfung mittels des Prüfgerätes 101 erfolgt meistens mit vertikaler Anordnung des Prüflings 201 bzw. seiner Prüfoberfläche 202. Der Prüfling 201 bzw. die Prüfoberfläche 202 ist vertikal gehalten eingespannt, wobei der eigentliche Belastungs- und Abriebvorgang in vertikaler Richtung entgegen der Schwerkraft erfolgt. Das Prüfgerät 101 weist einen Belastungskörper 102 auf, der unter einem Winkel von z. B. 45° oder 60° auf den Prüfling 201 bzw. die Prüfoberfläche 202 auftrifft, in schleifender Bewegung, ausschließlich entgegen der Schwerkraft, einen definierten Weg, der ggf. einstellbar ist und als Reibweg bezeichnet wird, bewegt wird. Beim Zurückziehen des Belastungskörpers 102 von dem Prüfling 201 bzw. der Prüfoberfläche 202 kann der Belastungskörper 102 teilweise oder vollständig von der Oberfläche abheben.

Der Belastungskörper 102 selbst kann unterschiedliche Geometrien und werkstoffliche Eigenschaften aufweisen. So ist bei den oben aufgeführten Prüfgeräten 101 der Belastungskörper 102 meist ein Silikonstempel, der in einer starren Hülse, beispielsweise einem Metall- oder Kunststoffteil, gefasst ist, welches mit der Antriebseinheit 103 verbunden ist. Ein Teil des Belastungskörpers 102 ragt aus der Hülse heraus und weist einen definierten Krümmungsradius auf. Die Antriebseinheit 103 weist einen drehbar gelagerten Zylinder 108 auf, der einen nicht-rotierenden, unidirektional (Doppelpfeil P₁) beweglichen Kolben 109 besitzt und um eine Achse P schwenkbar (Doppelpfeil P₂) ist. Die Antriebseinheit 103 ermöglicht eine Relativbewegung des Belastungskörpers 102 (Pfeile F₁ und F₂). Der Krümmungsradius liegt in den vorhandenen Prüfgeräten meist im Bereich von 10 bis 50 mm, wobei auch andere Krümmungsradien verwendet werden. Der Werkstoff des Belastungskörpers 102 ist meist aus Silikonkautschuk, um die Elastizität der menschlichen Fingerbeere und des menschlichen Gewebes nachzubilden. Der Prüfling 201 selbst kann unterschiedlichste Eigenschaften aufweisen. So können glatte oder raue, gewölbte oder flache und sogar bewegliche Proben wie z. B. Elektrotaster geprüft werden. Es existieren Belastungskörper 102 mit unterschiedlichen Oberflächenrauheiten, unterschiedlichen Oberflächenstrukturen, unterschiedlichen Oberflächengeometrien und unterschiedlichen Oberflächenkrümmungsradien. Die Belastungskörper können aus unterschiedlichen Materialien bestehen.

Die eigentliche Kontaktierung der Prüfoberfläche 202 erfolgt durch ein Band, ein gewebeartiges Textil, ein schwammartiges Reibmedium oder eine andere verwobene Struktur. Das Band, das gewebeartige Textil, das schwammartige Reibmedium oder die andere verwobene Struktur werden im Folgenden gemeinsam als Abriebband bezeichnet. Das Abriebband 104 befindet sich von oben nach unten hängend zwischen der Prüfoberfläche 202 und dem Belastungskörper 102, wobei das untere Ende des Abriebbandes lose hängend ist. Die Vorder- und Rückseite des Abriebbandes können unterschiedliche Werkstoff- und/oder Oberflächeneigenschaften haben. Es sind Abriebbänder bekannt, die nur auf einer Seite abrasiv sind oder mit einem Wirkmedium oder mit Wirkpartikeln beaufschlagt sind.

Das Abriebband 104 dient als Abrasionsmedium und kann entweder trocken oder mit einem Wirkmedium 105 getränkt verwendet werden. Das Wirkmedium kann apparativ oder manuell aufgebracht werden, zum Beispiel über eine Pipette oder mit Hilfe eines Spatels. Hierbei ist zu beachten, dass am unteren Ende des Abriebbandes 104 (ein kleines Gewicht (107) aufgebracht ist, so dass das Abriebband 104 nach unten gezogen wird, wenn keine weiteren Kräfte nach dem Ende seiner Belastung mit dem Belastungskörper einwirken. Bei dem Wirkmedium 105 kann es sich um eine Substanz wie beispielsweise Kunstschweiß, Sonnencreme, Zahnpasta und weitere Substanzen, mit der die Prüfoberfläche bei dem vorgesehenen Einsatz des Prüflings 201 in Kontakt kommen kann, handeln. Das Wirkmedium 105 kann mittels einer Zuleitung 106 zu dem Abriebband 104 geführt werden. Das Wirkmedium wird stellenweise auch als Wirkliquid bezeichnet.

Der Prüfvorgang läuft nun wie folgt ab: Der Belastungskörper 102 bewegt sich auf das lose vor dem Prüfling hängende Abriebband 104 zu, nimmt dieses in seine Bewegungsrichtung taktil mit, schlägt mit diesem Abriebband 104 auf die Prüfoberfläche 202 auf und führt die bereits beschriebene schleifende Bewegung auf der Prüfoberfläche 202 entgegen der Schwerkraft aus. Nach Erreichen des Endes des vorgegebenen Reibweges hebt der Belastungskörper 102 ab und löst sich vom Abriebband 104. Das Abriebband 104 wird durch das an seinem unteren Ende angebrachte Gewicht, das als Bandbeschwerungsgewicht bezeichnet wird, nach unten gezogen und gestrafft.

Nach einer vorgegebenen Anzahl an Prüfbelastungszyklen wird das Abriebband 104 einen definierten Weg nach unten bewegt, so dass die Reibkontaktfläche - das ist der Flächenabschnitt des Abriebbandes, mit dem das Abriebband die Prüfoberfläche kontaktiert - wieder über eine jungfräuliche abrasive Oberfläche verfügt, die nun die Reibkontaktfläche bildet. Dies ist notwendig, da bei einer tribologischen Prüfung immer beide Reibpaarungsoberflächen, d. h. die Prüfoberfläche und die Reibkontaktfläche, verschlissen werden. Die Gewebezuführung für das Abriebband 104 kann über eine Geweberolle oder über eine 90°-Umlenkung, z. B. durch eine Umlenkrolle, waagerecht motorisch oder schleifend erfolgen.

Zur Sicherstellung der Reproduzierbarkeit einer Prüfung ist es notwendig, dafür zu sorgen, dass:
(i) Der Abriebbandvorschub immer in gleicher Abriebszyklenzahl erfolgt.
(ii) Das Abriebband 104 nicht an der Prüfoberfläche 202 haften/ kleben bleibt.
(iii) Der Reibkoeffizient zwischen dem Belastungskörper 102 und dem Abriebband 104 immer größer ist als der Reibkoeffizient zwischen dem Abriebband 104 und dem Prüfling 201, damit das Abriebband 104 am Belastungskörper 102 anstatt am Prüfling 201 haftet.

Würde der Bandbelastungskörper über das Abriebband gleiten bzw. reiben, so würde auch die Oberflächenrauheit, die Geometrie und die damit einhergehende effektive Kontaktfläche durch das Abriebband hindurch auf den Prüfling kontinuierlich verändert werden. Dadurch würde der Belastungskörper unbrauchbar werden und die Prüfung nicht mehr reproduzierbar sein.

Insbesondere wenn als ergänzende Wirkmedien 105 liquide wässerige, ölige oder fetthaltige Substanzen, die zudem feste Partikel enthalten, verwendet werden, kann es vermehrt zu einem Anhaften des Abriebbandes 104 an der Prüfoberfläche 202 kommen. Dieser Vorgang tritt zudem nicht vorhersehbar auf, so dass die gesamte Prüfung mit all ihren Prüfzyklen streng und kostenintensiv beaufsichtigt werden muss, um Falschmessungen zu vermeiden. Es ist hierbei vor allem darauf zu achten, dass das unten am Abriebband 104 angehängte Bandbeschwerungsgewicht beim Lastfall - d. h. bei der Belastung des Abriebbandes 104 mit dem Belastungskörper 102 - nach oben gezogen wird und nach dem Durchfahren des Reibweges wieder nach unten fällt.

Ein weiteres Problem ergibt sich durch die begrenzte Abriebbandlänge, die für einen Prüfdurchlauf zur Verfügung steht. Nach einer Anzahl n von Weiterbewegungszyklen des Abriebbandes 104 trifft das Bandbeschwerungsgewicht auf z. B. der Labortischoberfläche auf, auf der sich das ganze Prüfgerät 101 befindet, und verliert damit seine Funktion, das Abriebband 104 zu straffen. Einige Anwender haben deswegen ein Loch in die Labortischplatte geschnitten, so dass sich das Abriebband 104 mitsamt seines Bandbeschwerungsgewichts bis zum Fußboden bewegen kann. Nachteil dieser Lösung ist jedoch, dass das nach unten wirksame Ziehgewicht bedingt durch das Bandbeschwerungsgewicht und das Eigengewicht des Abriebbandes stetig größer wird, also nicht konstant ist. Außerdem wird dabei das Abriebband gestreckt, so dass sich die Abriebs- und Belastungseigenschaften seiner Oberfläche kontinuierlich verändern. Außerdem wird die Pendellänge des Abriebbandes größer.

DE 102 05 435 C1 offenbart eine Vorrichtung zur Bestimmung der Verschleißresistenz einer Oberfläche. Dazu wird ein Schleifband von einem Abwickler zu einem Aufwickler geführt. Das Schleifband wird von einem Belastungskörper während des Bandlaufes gegen die Oberfläche gepresst. Aus US 2014/0090445 A1 ist eine Vorrichtung zur Messung des Verschleißes der Oberfläche eines Gegenstandes bekannt, bei der ein Abrasionsband von einem Abwickler zu einem Aufwickler geführt wird. Das Band wird mittels einer Fingersonde gegen die Oberfläche gepresst. Während der Prüfung bewegt sich das Band.

Aufgabe der Erfindung ist es, die Nachteile nach dem Stand der Technik zu beseitigen. Es soll insbesondere eine Prüfvorrichtung zur Prüfung einer Oberfläche eines Prüflings angegeben werden, die einerseits ein Anhaften des Abriebbandes an der Oberfläche des Prüflings verhindert und andererseits die Gefahr einer Veränderung des Bandbeschwerungsgewichtes verringert.

Diese Aufgabe wird durch die Merkmale der Ansprüche 1 und 14 gelöst. Zweckmäßige Ausgestaltungen der Erfindungen ergeben sich aus den Merkmalen der Unteransprüche.

Nach Maßgabe der Erfindung ist eine Prüfvorrichtung zum Prüfen einer Oberfläche eines Prüflings unter Verwendung eines Abriebbands und eines Belastungskörpers vorgesehen, wobei das Abriebband abschnittsweise von einer Bereitstellungseinrichtung unter Passieren eines Prüfbereiches, in dem das Abriebband in Kontakt mit der Oberfläche des Prüflings unter Einwirkung des Belastungskörpers auf das Abriebband gebracht werden kann, zu einem Aufwickler geführt ist, dadurch gekennzeichnet, dass der Aufwickler einen Antrieb zur Bewegung des Abriebbandes mittels des Aufwicklers aufweist.

Die erfindungsgemäße Prüfvorrichtung ermöglicht das Aufwickeln des verbrauchten Abriebbandes mithilfe des Aufwicklers. Damit kann ein Anhaften des Abriebbandes an der Oberfläche des Prüflings verhindert werden. Außerdem kann die Gefahr einer Veränderung des Bandbeschwerungsgewichtes und eines Pendelns des Abriebbandes verringert werden. Der Aufwickler kann für eine Gewebestraffung des Abriebbandes auf dem Prüfling sorgen, beispielsweise nach einer Reib- und/oder Stoßbeanspruchung. Die erfindungsgemäße Prüfvorrichtung kann eine Einstelleinrichtung zur Einstellung der Straffungskraft, die der Aufwickler auf das Abriebgewebe ausübt, aufweisen. Die Einstellung der Straffungskraft kann dabei manuell oder elektromotorisch vorgenommen werden. Bei der Einstelleinrichtung zur Einstellung der Straffungskraft, die der Aufwickler auf das Abriebband ausübt, kann es sich um eine Federeinstellungseinrichtung oder eine Gewichtskörpereinstelleinrichtung handeln. Die Federeinstellungseinrichtung kann die Einstellung der Straffungskraft mittels einer Feder bewirken. Bei der Federeinstellungseinrichtung kann es sich um eine manuelle oder eine elektromotorische Federeinstellungseinrichtung handeln. Die Gewichtskörpereinstelleinrichtung kann die Einstellung der Straffungskraft mittels eines Gewichtskörpers bewirken. Bei der Gewichtskörpereinstellvorrichtung kann es sich um eine manuelle oder eine elektromotorische Gewichtskörpereinstelleinrichtung handeln. Die Straffungskraft kann je nach Gewebetyp des Abriebbandes und/oder dem verwendeten Wirkmedium eingestellt werden.

Das Abriebband wird abschnittsweise von der Bereitstellungseinrichtung unter Passieren eines Prüfbereiches, in dem das Abriebband mittels des Belastungskörpers in Kontakt mit der Oberfläche des Prüflings gebracht werden kann, zu dem Aufwickler geführt. Das Abriebband wird nur dann in Kontakt mit der Oberfläche des Prüflings gebracht, wenn der Transport des Abriebbandes von der Bereitstellungseinrichtung zu dem Aufwickler unterbrochen ist. Wird das Abriebband von der Bereitstellungseinrichtung zu dem Aufwickler transportiert, so befindet sich das Abriebband nicht in Kontakt mit der Oberfläche des Prüflings. Das Abriebband wird somit diskontinuierlich transportiert.

Bei dem Abriebband kann es sich um ein an sich bereits bekanntes Abriebband handeln. Das Abriebband kann als Abrasionsmedium dienen. Es kann entweder trocken oder mit einem Wirkmedium getränkt sein. Das Wirkmedium kann apparativ oder manuell aufgebracht werden, zum Beispiel über eine Pipette oder mit Hilfe eines Spatels. Das Abtriebband kann auch zur Anschmutzung der Oberfläche des Prüflings eingesetzt werden. Es kann daher auch als Anschmutzband bezeichnet werden. Das Abriebband kann auch zur Reinigung der Oberfläche des Prüflings eingesetzt werden. Es kann daher auch als Reinigungsband bezeichnet werden.

Bei dem Antrieb der erfindungsgemäßen Prüfvorrichtung kann es sich um einen Motor zum Drehen des Aufwicklers unter Auf- oder Abwicklung des Abriebbandes handeln. Der Motor wird im Folgenden auch als Wickelmotor bezeichnet. Die erfindungsgemäße Prüfungsvorrichtung kann einen Abwickler aufweisen, von dem das Abriebband abgewickelt wird. Der Abwickler kann einen Antrieb aufweisen. Der Abwickler kann somit aktiv angetrieben sein. In einer Alternative kann der Abwickler eine Schleifkupplung aufweisen. Das Abriebband kann von dem Abwickler unter Passieren des Prüfbereiches zu dem Aufwickler geführt werden. Dazu kann die erfindungsgemäße Prüfvorrichtung eine oder mehrere Führungsrollen aufweisen. Das Abriebband kann als Rollenware in Form eines Coils bereitgestellt werden.

Die erfindungsgemäße Prüfvorrichtung kann einen Tänzer aufweisen, der zwischen einer oberen Position und einer unteren Position beweglich ist. Mittels des Tänzers kann eine Umlenkung des Abriebbandes zum Aufwickler erfolgen. Der Tänzer kann für eine Gewebestraffung des Abriebbandes auf dem Prüfling sorgen, beispielsweise nach einer Reib- und/oder Stoßbeanspruchung. Der Tänzer kann somit allein oder gemeinsam mit dem Aufwickler das Beschwerungsgewicht ersetzen. Die erfindungsgemäße Prüfvorrichtung kann eine Einstelleinrichtung zur Einstellung der Straffungskraft, die der Tänzer auf das Abriebgewebe ausübt, aufweisen. Mittels der Einstelleinrichtung kann eine Straffungskraft voreingestellt sein, die den Tänzer in seiner unteren Position halten soll. Bei der Einstelleinrichtung zur Einstellung der Straffungskraft, die der Tänzer auf das Abriebband ausübt, kann es sich um eine Federeinstellungseinrichtung oder eine Gewichtskörpereinstelleinrichtung handeln. Die Federeinstellungseinrichtung kann die Einstellung der Straffungskraft mittels einer Feder bewirken. Bei der Federeinstellungseinrichtung kann es sich um eine manuelle oder eine elektromotorische Federeinstellungseinrichtung handeln. Die Gewichtskörpereinstelleinrichtung kann die Einstellung der Straffungskraft mittels eines Gewichtskörpers bewirken. Bei der Federeinstellungseinrichtung kann es sich um eine manuelle oder eine elektromotorische Federeinstellungseinrichtung handeln. Die Straffungskraft kann je nach Gewebetyp des Abriebbandes und/oder dem verwendeten Wirkmedium eingestellt werden.

Bei dem Tänzer kann es sich um eine Tänzerrolle handeln. Die Tänzerrolle kann an einer Tänzerrollenhalterung um eine Drehachse (T₁) drehbar gelagert sein. Es kann vorgesehen sein, dass die Tänzerrollenhalterung um eine Drehachse (T₂) drehbar gelagert ist, die parallel zur Drehachse (T₁) der Tänzerrolle liegt und von dieser beabstandet ist. Es kann vorgesehen sein, dass eine Drehachse (T₁) der Tänzerrolle in ihrer unteren Position in einer ersten vertikalen Ebene und in ihrer oberen Position in einer zweiten vertikalen Ebene liegt, die von der ersten vertikalen Ebene beabstandet ist. Es kann vorgesehen sein, dass, wenn die Tänzerrolle die untere Position aus irgendeinem Grund nicht erreicht, die Prüfung des Prüflings angehalten wird, da sonst eine Falschprüfung erfolgen würde und/oder das Ende des Abriebbandes erreicht ist.

Die erfindungsgemäße Prüfvorrichtung kann eine Erfassungseinrichtung zur Erfassung der Position des Tänzers aufweisen. Bei der Erfassungseinrichtung zur Erfassung der Position des Tänzers kann es sich beispielsweise um ein Positionsmesssystem, einen Positionssensor oder einen Positionsschalter handeln. Das Positionsmesssystem kann beispielsweise ein optisches Positionsmesssystem sein. Die Position des Tänzers kann mittels der Erfassungseinrichtung erfasst werden und an eine Steuerungseinrichtung weitergegeben werden. Insbesondere kann die Position des Tänzers elektrisch erfasst werden. Die elektrisch erfasste Position kann als Signal an die Steuerungseinrichtung weitergegeben werden.

Bei der Steuerungseinrichtung kann es sich um eine zentrale Steuerungseinrichtung zur Steuerung der erfindungsgemäßen Prüfvorrichtung handeln. Alternativ kann eine lokale Steuerungseinrichtung zur Steuerung einer oder mehrerer Komponenten, beispielsweise des Aufwicklers und/oder des Tänzers, vorgesehen sein. Bei einer Steuerungseinrichtung kann es sich um eine elektronische Datenverarbeitungseinrichtung, beispielsweise einen Computer, handeln.

Die erfindungsgemäße Prüfeinrichtung kann einen Belastungskörper aufweisen, der Belastungskörpern entspricht, die bei vorbekannten Prüfgeräten eingesetzt werden. Mittels des Belastungskörpers kann der Abschnitt des Abriebbandes, der sich im Prüfbereich befindet, in Kontakt mit der Oberfläche des Prüflings gebracht werden. Bevor der Belastungskörper auf das Abriebband einwirkt, ist die Führung des Abriebbandes von der Bereitstellungseinrichtung zu dem Abwickler unterbrochen, d. h. der Abschnitt des Abriebbandes, der sich im Prüfbereich befindet, verbleibt in dem Prüfungsbereich, während der Belastungskörper auf das Abriebband einwirkt, beispielsweise für eine vorgegebene Abriebszyklenzahl. Unter dieser Zahl wird die Zahl von Zyklen verstanden, in der der Belastungskörper auf den im Prüfbereich befindlichen Abschnitt des Abriebbandes einwirken soll. Erst nach Abschluss der vorgegebenen Abriebszyklenzahl wird der im Prüfbereich befindliche, nun benutzte Abschnitt des Abriebbandes durch einen neuen, noch unbenutzten Abschnitt ersetzt.

Die erfindungsgemäße Prüfvorrichtung kann eine Lagerung für den Belastungskörper sowie eine Antriebseinheit zum Bewegen des Belastungskörpers aufweisen. Die Antriebseinheit kann einen drehbar gelagerten Zylinder aufweisen, der einen nicht-rotierenden, unidirektional beweglichen Kolben besitzt und eine Relativbewegung des Belastungskörpers ermöglicht. Dabei ist der Belastungskörper in einer ersten Position von dem Abriebband beabstandet, d. h. er kontaktiert das Abriebband nicht und presst das Abriebband auch nicht gegen die Oberfläche des Prüflings. In einer zweiten Position befindet sich der Belastungskörper in Kontakt mit der ihm zugewandten Flächenseite des Abriebbandes, wobei er die andere Flächenseite des Abriebbandes gegen die Oberfläche des Prüflings presst. Mittels des Antriebelementes kann der Belastungskörper von einer ersten Position in die zweite Position und von der zweiten in die erste Position bewegt werden. Während sich der Belastungskörper in der zweiten Position befindet, wird das Abriebband nicht mittels des Abwicklers bewegt. Der Belastungskörper kann mittels seiner Lagerung derart in der Prüfvorrichtung angeordnet sein, dass er sich ganz oder teilweise in dem Prüfbereich befindet. Vorzugsweise weist der Belastungskörper eine Kontaktfläche auf, die in Kontakt mit der ihm zugewandten Flächenseite des Abriebbandes gelangt, wenn der Belastungskörper in seine zweite Position bewegt wird. Es kann vorgesehen sein, dass sich diese Kontaktfläche in dem Prüfbereich befindet, wenn der Belastungskörper in seiner zweiten Position ist. Es kann zusätzlich vorgesehen sein, dass sich diese Kontaktfläche in dem Prüfbereich befindet, wenn der Belastungskörper in seiner ersten Position ist. Der Belastungskörper befindet sich nicht in Kontakt mit dem Prüfling. Es kann vorgesehen sein, dass die Kontaktfläche des Belastungskörpers in dessen zweiter Position der Oberfläche des Prüflings gegenüberliegt. Sie kann dabei parallel zur Oberfläche des Prüflings ausgerichtet sein.

Das eingesetzte Abriebband kann ein an sich bekanntes Abriebband sein, wie es bei vorbekannten Prüfgeräten eingesetzt wird. Unter Verwendung der erfindungsgemäßen Prüfvorrichtung wird das Abriebband in den Prüfbereich derart geführt, dass es mit einer seiner Flächenseiten der zu prüfenden Oberfläche des Prüflings zugewandt ist. Im Prüfbereich ist der Prüfling vorzugsweise derart angeordnet, dass seine zu prüfende Oberfläche im Wesentlichen vertikal angeordnet ist. Zum Halten des Prüflings im Prüfbereich kann die erfindungsgemäße Prüfvorrichtung eine Halteeinrichtung aufweisen, beispielsweise eine Halteeinrichtung, in der der Prüfling eingespannt ist. Mittels der Halteeinrichtung wird der Prüfling unbeweglich gehalten. Der Prüfling wird während der Prüfung nicht bewegt.

Mittels der Erfassungseinrichtung kann sichergestellt werden, dass eine Reinigung des Abriebbandes nur erfolgen kann, wenn sich das Abriebband nicht in Kontakt mit der Oberfläche des Prüflings befindet. Befindet sich das Abriebband nicht in Kontakt mit der Oberfläche des Prüflings, so ist ein Spalt zwischen dem Abriebband und der Oberfläche des Prüflings ausgebildet. Eine Reinigung des Abriebbandes kann beispielsweise durch Abblasen, vorzugsweise automatisiertes Abblasen, erfolgen.

Die erfindungsgemäße Prüfvorrichtung kann eine oder mehrere Führungsrollen zur Führung des Abriebbandes aufweist. Es kann vorgesehen sein, dass eine oder mehrere Führungsrollen zwischen dem Prüfbereich und dem Aufwickler angeordnet sind, d. h. das Abriebband kann im Anschluss an den Prüfbereich mittels einer oder mehreren Führungsrollen zu dem Aufwickler geführt werden. Es können eine oder mehrere Führungsrollen zwischen dem Tänzer und dem Aufwickler angeordnet sein, d. h. dass das Abriebband im Anschluss an den Tänzer mittels einer oder mehrerer Führungsrollen zu dem Aufwickler geführt werden kann. Zumindest eine der Führungsrollen kann eine Umlenkrolle sein. Die erfindungsgemäße Prüfvorrichtung kann somit eine oder mehrere Umlenkrollen zur Führung des Abriebbandes aufweisen. Beispielsweise können eine oder mehrere Umlenkrollen zwischen dem Tänzer und dem Aufwickler angeordnet sein.

Das Abriebband wird diskontinuierlich von der Bereitstellungseinrichtung zu dem Aufwickler geführt. Dabei wird das Abriebband abschnittweise auf den Aufwickler aufgewickelt. Mit dem Aufwickeln eines Abschnittes auf den Aufwickler wird ein Abschnitt des Abriebbandes, der sich bisher in dem Prüfbereich befand, durch einen neuen Abschnitt des Abriebbandes ersetzt. Die Länge des aufgewickelten Abschnittes wird im Folgenden als Schublänge bezeichnet. Die Länge des Abschnittes, der aus dem Prüfbereich herausgeführt wird, weist im Wesentlichen die Schublänge auf. Die Länge des Abschnittes, der in den Prüfbereich hineingeführt wird, weist im Wesentlichen die Schublänge auf. Der Ausdruck "im Wesentlichen" soll Abweichungen zwischen der Schublänge und der tatsächlichen Länge des Abschnittes, der aus dem Prüfbereich herausgeführt bzw. hineingeführt wird, kennzeichnen, die sich beispielsweise aus der Einstellung der Spannung des Abriebbandes oder der Straffungskraft, die der Aufwickler auf das Abriebband ausübt, ergeben. Der Abschnitt des Abriebbandes, der aus dem Prüfbereich herausgeführt wird, wird im Folgenden auch als "benutzter Abschnitt" bezeichnet, der Abschnitt des Abriebbandes, der in den Prüfbereich hineingeführt wird, wird im Folgenden auch als "unbenutzter Abschnitt" bezeichnet.

Die erfindungsgemäße Prüfvorrichtung kann eine Einrichtung zur Bestimmung der Schublänge des Abriebbandes aufweisen. Es kann vorgesehen sein, dass mit dieser Einrichtung die Schublänge des Abriebbandes bei der Nachführung bestimmt wird. Unter dem Begriff "Nachführung" wird dabei das Ersetzen eines zur Prüfung der Oberfläche des Prüflings bereits benutzen Abschnitts des Abriebbandes durch einen bisher unbenutzten Abschnitt des Abriebbandes verstanden. Dazu wird der benutzte Abschnitt des Abriebbandes mittels des Aufwicklers aus dem Prüfbereich gezogen und durch den unbenutzten Abschnitt des Abriebbandes ersetzt. Das Aufwickeln kann mit einer Drehung zumindest einer Rolle, beispielsweise der Führungsrolle oder des Tänzers, verbunden sein, die mittels der Einrichtung zur Bestimmung der Schublänge des Abriebbandes bestimmt wird. Beispielsweise können mittels der Einrichtung zur Bestimmung der Schublänge des Abriebbandes Messimpulse erhalten werden, die an die zentrale Steuerungseinrichtung der erfindungsgemäßen Prüfvorrichtung weitergeleitet und/oder in einer Lokalelektronik der Einrichtung zur Bestimmung der Schublänge des Abriebbandes verarbeitet werden. Mittels der Einrichtung zur Bestimmung der Schublänge des Abriebbandes kann zusätzlich die Gesamtlänge des aufgewickelten Abriebbandes ermittelt werden. Aus der Gesamtlänge des aufgewickelten Abriebbandes und der Gesamtlänge des Abriebbandes kann die für die Prüfung verbleibende Länge des Abriebbandes bestimmt werden. Unterschreitet diese Länge einen vorgegebenen Wert, so kann über eine Warneinrichtung ein Warnhinweis ausgegeben werden. Bei der Warneinrichtung kann es sich beispielsweise um eine optische und/oder akustische Warneinrichtung handeln. Bei der optischen Warneinrichtung kann es sich beispielsweise um ein Display handeln, auf dem der Warnhinweis ausgegeben wird. Die erfindungsgemäße Prüfungsvorrichtung kann somit ein Display zur Ausgabe eines solchen Warnhinweises aufweisen.

Es kann vorgesehen sein, dass eine der Führungsrollen oder der Tänzer über eine Einrichtung zur Bestimmung der Schublänge des Abriebbandes verfügen. Bei der Einrichtung zur Bestimmung der Schublänge des Abriebbandes kann es sich beispielsweise um einen Positionsschalter oder Positionssensor handeln, mit der die Position der Führungsrolle oder des Tänzers bestimmt wird. Auf diese Weise kann zum Beispiel die Zahl der Drehungen der Führungsrolle oder des Tänzers bestimmt werden. In einer Ausführungsform ist die Einrichtung zur Bestimmung der Schublänge des Abriebbandes eine Tachoscheibe. Die Tachoscheibe kann an der Führungsrolle oder dem Tänzer befestigt sein.

Es kann vorgesehen sein, dass zumindest eine der Führungsrollen Führungselemente aufweist, die eine Bewegung des Abriebbandes in axialer Richtung, bezogen auf die Drehachse der Führungsrolle, verhindern. Es kann alternativ oder zusätzlich vorgesehen sein, dass der Tänzer Führungselemente aufweist, die eine Bewegung des Abriebbandes in axialer Richtung, bezogen auf die Drehachse des Tänzers, verhindern. Bei den Führungselementen kann es sich um umlaufende Stege handeln, die sich vom Mantel der Führungsrolle oder des Tänzers in radialer Richtung erstrecken. Die Führungselemente werden dabei auch als seitliche Führungselemente bezeichnet, weil die Längskanten des Abriebbandes den Führungselementen zugewandt sind. An dem Mantel der Führungsrolle oder des Tänzers liegt das Abriebband mit einer seiner Flächenseiten an, wenn es zum Aufwickler geführt ist. Der Mantel ist der Mantel der Welle der jeweiligen Führungsrolle oder der Mantel des Tänzers. Die Längsachse der Welle ist die Drehachse der Führungsrolle bzw. des Tänzers.

Nach dem Stand der Technik wurde das Abriebband lediglich im Bereich oberhalb des Prüfbereiches geführt. Dabei kam es sehr oft zu seitlichen Pendelbewegungen des Abriebbandes, deren Amplitude auch durch das Beschwerungsgewicht vergrößert wurde. Mittels der Führungsrollen, die zwischen dem Prüfbereich und dem Aufwickler angeordnet sind, und/oder dem Tänzer kann eine seitliche Pendelbewegung des Abriebbandes verhindert werden. Zu diesem Zweck kann es vorteilhaft sein, wenn zumindest eine der Führungsrollen und/oder der Tänzer Führungselemente aufweist. Die Verhinderung einer seitlichen Pendelbewegung ermöglicht die Verwendung eines Abriebbandes mit - im Vergleich zum Stand der Technik - geringerer Breite, was mit einer Material- und Kostenersparnis verbunden ist.

Weist die erfindungsgemäße Prüfvorrichtung Führungsrollen mit Führungselementen auf, so ist der Abstand zwischen den Führungselementen dieser Führungsrollen vorzugsweise verstellbar. Der Ausdruck "Abstand" bezieht sich dabei auf die Drehachse der Führungsrolle. Weist die erfindungsgemäße Prüfvorrichtung einen Tänzer mit Führungselementen auf, so ist der Abstand zwischen den Führungselementen des Tänzers vorzugsweise verstellbar. Der Ausdruck "Abstand" bezieht sich dabei auf die Drehachse des Tänzers. Die erfindungsgemäße Prüfverrichtung kann durch das Verstellen des Abstandes zwischen den Führungselementen einer Führungsrolle und/oder des Tänzers an Abriebbänder unterschiedlicher Breite angepasst werden. Soll beispielsweise ein Abriebbänder einer ersten Breite durch ein Abriebband einer zweiten Breite, die größer oder kleiner als die erste Breite ist, ersetzt werden, so wird bei allen Führungsrollen, die Führungselemente aufweisen, und, falls vorhanden, dem Tänzer, wenn dieser Führungselemente aufweist, der Abstand zwischen den Führungselementen verstellt.

Zur Veränderung des Abstandes zwischen den beiden Führungselementen einer Führungsrolle oder des Tänzers kann zumindest eines der beiden Führungselemente verstellbar an der Führungsrolle oder dem Tänzer befestigt sein. Beispielsweise kann ein Führungselement oder der Tänzer ein Fixierungselement zur lösbaren Fixierung des Führungselementes an der Führungsrolle bzw. dem Tänzer aufweisen. Nach Lösen des Fixierungselementes kann das Fixierungselement in axialer Richtung, bezogen auf die Drehachse der Führungsrolle oder des Tänzers, in eine vorgegebene Position verschoben werden und in dieser Position mittels des Fixierungselementes fixiert werden. Bei dem Fixierungselement kann es sich beispielsweise um eine Schraube handeln, mit der das Führungselement an dem Mantel der Führungsrolle oder des Tänzers fixiert wird. Vorzugsweise können beide Führungselemente verstellbar sein. Der Mantel ist der Mantel der Welle der jeweiligen Führungsrolle oder der Mantel des Tänzers. Mittels des Fixierungselementes, beispielsweise der Schraube, kann das Führungselement von außen an dem Mantel fixiert werden.

Alternativ kann zum Verändern des Abstandes zwischen den beiden Führungselementen einer Führungsrolle oder des Tänzers vorgesehen sein, dass die Führungsrolle bzw. der Tänzer eine Welle aufweisen, deren Länge verstellbar ist. Mittels eines Arretierungselementes kann die vorgegebene Länge der Welle lösbar fixiert werden. Ein Beispiel einer längenverstellbaren Welle ist eine Teleskopwelle. Die beiden Führungselemente können an den Stirnseiten der längenverstellbaren Welle angeordnet sein. Eine Veränderung der Länge der längenverstellbaren Welle ist mit einer Veränderung des Abstandes zwischen den beiden Führungselementen verbunden. In einer Ausführungsform ist die längenverstellbare Welle eine Hohlwelle, die mittig in zwei Rohrhälften teilbar ist, wobei die beiden Rohrhälften ineinander schiebbar sind und auf einer beliebigen Position arretiert werden können.

Der Aufwickler kann eine Aufwickelrolle sein. Die Aufwickelrolle kann auch als Nehmerrolle bezeichnet werden. Ist der Aufwickler eine Aufwickelrolle, so kann die Aufwickelrolle Führungselemente aufweisen, die eine Bewegung des Abriebbandes in axialer Richtung, bezogen auf die Drehachse der Aufwickelrolle, verhindern. Bei den Führungselementen kann es sich um umlaufende Stege handeln, die sich vom Mantel der Aufwickelrolle in radialer Richtung erstrecken. Der Mantel ist der Mantel der Welle der Aufwickelrolle. Die Längsachse der Welle ist die Drehachse der Aufwickelrolle. Vorzugsweise ist der Abstand zwischen den Führungselementen der Aufwickelrolle verstellbar. Dazu können die Führungselemente, wie bereits im Zusammenhang mit den Führungsrollen beschrieben, verstellbar sein oder die Welle der Aufwickelrolle, wie ebenfalls bereits im Zusammenhang mit den Führungsrollen beschrieben, eine verlängerbare Welle sein.

Weist die erfindungsgemäße Prüfvorrichtung einen Abwickler auf, so kann der Abwickler eine Abwickelrolle sein. Die Abwickelrolle kann auch als Geberrolle bezeichnet werden. Ist der Abwickler eine Abwickelrolle, so kann die Abwickelrolle Führungselemente aufweisen, die eine Bewegung des Abriebbandes in axialer Richtung, bezogen auf die Drehachse der Abwickelrolle, verhindern. Bei den Führungselementen kann es sich um umlaufende Stege handeln, die sich vom Mantel der Abwickelrolle in radialer Richtung erstrecken. Der Mantel ist der Mantel der Welle der Abwickelrolle. Die Längsachse der Welle ist die Drehachse der Abwickelrolle. Vorzugsweise ist der Abstand zwischen den Führungselementen der Abwickelrolle verstellbar. Dazu können die Führungselemente, wie bereits im Zusammenhang mit den Führungsrollen beschrieben, verstellbar sein oder die Welle der Abwickelrolle, wie ebenfalls bereits im Zusammenhang mit den Führungsrollen beschrieben, eine verlängerbare Welle sein.

Weist die erfindungsgemäße Prüfvorrichtung keinen Abwickler, sondern Trogzuführung auf, so kann eine Anpassung des Troges an die Breite des Abriebbandes vorgesehen sein. Beispielsweise kann die Trogbreite verstellbar sein. Alternativ oder zusätzlich können ein oder mehrere Abstandselemente, die auch als Spacingelemente bezeichnet werden, vorgesehen sein. Das oder die Abstandselemente können in den Trog derart eingebracht werden, dass sie an einer Innenwand des Troges anliegen, wodurch die Breite des Innenraums des Troges verringert wird. Durch Entfernen eines oder mehrerer Abstandselemente aus dem Trog kann die Breite des Innenraums wieder vergrößert werden. Bei der oder den Seitenwänden des Trägers, an denen die Abstandselemente anliegen, kann es sich um die Seitenwände handeln, die einer Längskante des Abriebbandes zugewandt sind. Mittels des oder der Abstandselemente kann somit die Trogbreite seitlich auf die notwendige Breite einstellbar sein.

Um eine Nachrüstung vorhandener Prüfvorrichtung zu ermöglichen, kann vorgesehen sein, dass die Aufwicklung des benutzten Abriebgewebes als Modul bereitgestellt wird. Dieses Modul kann bei einer vorhandenen Prüfvorrichtung installiert werden. Das Modul weist den Aufwickler auf. Es kann ferner eine oder mehrere Führungsrollen und/oder den Tänzer aufweisen. Es kann außerdem eine Einrichtung zur Bestimmung der Schublänge des Abriebbandes aufweisen. Die Bereitstellung der Aufwicklung des benutzten Abriebgewebes als Modul ermöglicht bei vorhandenen Prüfvorrichtungen, die eine Zuführung des Abriebbandes per Rolle oder als Trogzuführung vorsehen, die Ergänzung bekannter Führungssysteme für das Abriebband. Die Einbindung der Aufwicklung des Abriebbandes kann entweder direkt in die Zentralsteuerung der Prüfvorrichtung oder über eine Lokalsteuerung erfolgen. Das Modul kann einen Rahmen aufweisen, an dem der Aufwickler und, falls vorhanden, die weiteren Elemente des Moduls befestigt sind. In einer Ausführungsform der Erfindung weist das Modul neben dem Aufwickler auch den Abwickler auf. Das Modul kann somit auch als Abwickel- und Aufwickeleinheit ausgeformt sein. Die Abwickel- und Aufwickeleinheit kann eine oder mehrere Führungsrollen und/oder den Tänzer aufweisen. Sie kann außerdem eine Einrichtung zur Bestimmung der Schublänge des Abriebbandes aufweisen.

Abgesehen von der Führung des Abriebbandes mittels des Aufwicklers und, falls vorgesehen, einer oder mehrerer Führungsrollen und/oder dem Tänzer kann die erfindungsgemäße Prüfvorrichtung aus dem Stand der Technik bekannten Prüfgeräten entsprechen. Die erfindungsgemäße Prüfvorrichtung kann insbesondere eine oder mehrere Einrichtungen aufweisen, die die aus dem Stand der Technik bekannten Prüfgeräte aufweisen. Die erfindungsgemäße Prüfvorrichtung weist jedoch kein Gewicht am Ende des Abriebbandes auf. Die erfindungsgemäße Prüfvorrichtung kann beispielsweise eine Antriebseinheit zur Bewegung des Belastungskörpers aufweisen, die der aus dem Stand der Technik bekannten Antriebseinheit entspricht. Sie kann auch eine andere, aus dem Stand der Technik an sich bekannte Antriebseinheit zur Bewegung des Belastungskörpers aufweisen. Sie kann ferner eine Zuleitung für ein Wirkmedium aufweisen, die der aus dem Stand der Technik bekannten Zuleitung entspricht.

Mittels einer Zählrolle kann die Länge des Abriebbandes bestimmt werden, die auf den Aufwickler aufgewickelt worden ist. Bei der Zählrolle kann es sich um den Tänzer handeln. Alternativ oder zusätzlich kann zumindest eine der Führungsrollen eine Zählrolle sein.

Nach Maßgabe der Erfindung ist ein Verfahren zum Prüfen einer Oberfläche eines Prüflings unter Verwendung der erfindungsgemäßen Prüfvorrichtung vorgesehen, wobei ein Abriebband abschnittsweise von einer Bereitstellungseinrichtung unter Passieren eines Prüfbereiches, in dem das Abriebband in Kontakt mit der Oberfläche des Prüflings unter Einwirkung eines Belastungskörpers gebracht wird, zu einem Aufwickler geführt wird, wobei das Abriebband mittels eines Antriebs, der den Aufwickler antreibt, bewegbar ist.

Es kann vorgesehen sein, dass durch Drehen des Aufwicklers die Spannung des Abriebbandes verändert wird. Durch Drehen in eine erste Richtung des Aufwicklers kann das Abriebband auf den Aufwickler aufgewickelt werden. Durch Aufwickeln des Abriebbandes kann der Abschnitt des Abriebbandes, der sich im Prüfbereich befindet und in der Regel bereits zur Prüfung benutzt wurde, aus dem Prüfbereich gezogen und durch einen neuen, unbenutzten Abschnitt des Abriebbandes ersetzt werden. Durch Drehung des Aufwicklers in die erste Richtung oder in entgegengesetzter Richtung zur ersten Richtung kann jedoch auch die Spannung des Abriebbandes eingestellt werden.

Bei der Bereitstellungseinrichtung kann es sich beispielsweise um den Abwickler oder, im Falle einer Trogzuführung, um einen Trog handeln.

Das erfindungsgemäße Verfahren und die erfindungsgemäße Vorrichtung ermöglichen eine Führung eines Abriebbandes unter Einstellung seiner Spannung von der Bereitstellungseinrichtung zum Abwickler. Damit kann auf ein Gewicht, das am Ende des Abriebbandes angebracht ist, verzichtet werden. Weitere Einzelheiten des erfindungsgemäßen Verfahrens sind bereits im Zusammenhang mit der erfindungsgemäßen Vorrichtung beschrieben worden. Auf diese Einzelheiten wird verwiesen.

Das erfindungsgemäße Verfahren und die erfindungsgemäße Vorrichtung stellen eine Reproduzierbarkeit der Prüfung der Oberfläche eines Prüflings sicher. Insbesondere kann sichergestellt werden, dass der Abriebbandvorschub immer in gleicher Abriebszyklenzahl erfolgt und das Abriebband nicht an der Oberfläche des Prüflings haften oder kleben bleibt. Dazu kann durch Veränderung der Spannung des Abriebbandes im Prüfbereich ein Spalt zwischen dem Abriebband und der Oberfläche des Prüflings eingestellt werden.

Nachdem die Oberfläche des Prüflings in der vorgegebenen Abriebzyklenzahl in Kontakt mit dem Abriebband gebracht worden ist, kann die Oberfläche des Prüflings mittels an sich bekannter Methoden beurteilt werden. Beispielsweise kann die Rauigkeit der Oberfläche beurteilt werden, z. B. unter Einsatz eines Rauigkeitsmesstasters oder mittels optischer Verfahren.

Die Erfindung wird nachstehend anhand von Ausführungsbeispielen, die die Erfindung nicht einschränken sollen, unter Bezugnahme auf die Zeichnungen näher erläutert. Dabei zeigen
- Fig. 1A: eine schematische Darstellung einer Oberfläche, die von einem Finger berührt werden soll;
- Fig. 1B: eine schematische Darstellung eines exemplarischen Prüfgerätes nach dem Stand der Technik;
- Fig. 2A: eine schematische Darstellung einer ersten Ausführungsform einer erfindungsgemäßen Prüfvorrichtung;
- Fig. 2B: eine schematische Darstellung eines Bewegungsablaufes eines Belastungskörpers bei der Prüfung;
- Fig. 3: eine schematische Darstellung einer zweiten Ausführungsform einer erfindungsgemäßen Prüfvorrichtung;
- Fig. 4: eine schematische Darstellung einer dritten Ausführungsform einer erfindungsgemäßen Prüfvorrichtung;
- Fig. 5A: eine Draufsicht auf eine Rolle;
- Fig. 5B: eine Schnittdarstellung der in Fig. 5A gezeigten Rolle, geschnitten entlang Schnittlinie A--A von Fig. 5A; und
- Fig. 6: eine perspektivische Darstellung eines Moduls zum Aufwickeln des Abriebbandes.

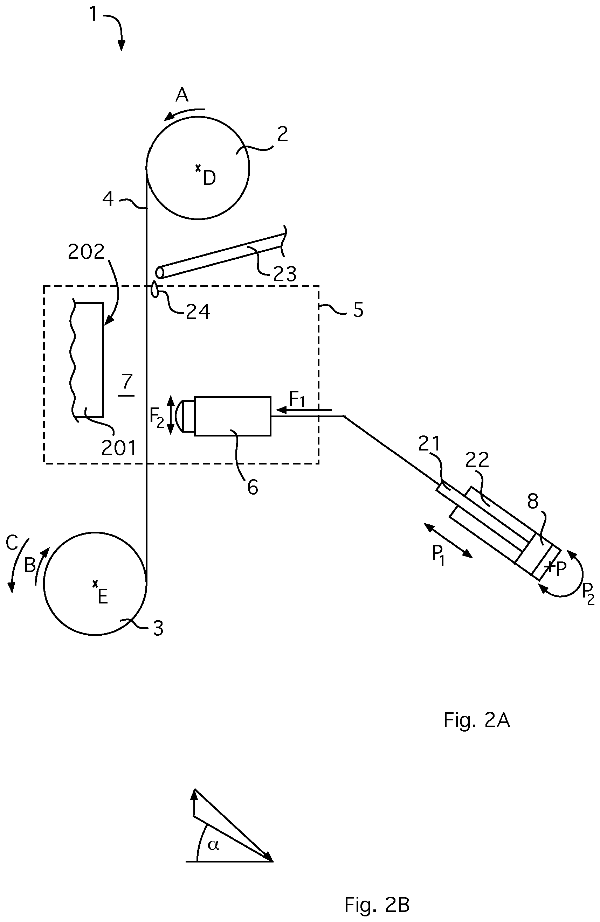

Die in Fig. 2A gezeigte erste Ausführungsform einer erfindungsgemäßen Prüfvorrichtung 1 weist eine Abwickelrolle 2 und eine Aufwickelrolle 3 auf. Von der Abwickelrolle 2 wird ein Abriebband 4 abgewickelt und durch den Prüfbereich 5 zur Aufwickelrolle 3 geführt, auf die das Abriebband 4 aufgewickelt wird. Im Prüfbereich 5 ist der Prüfling 201 derart angeordnet, dass sich seine zu prüfende Oberfläche 202 in vertikaler Lage befindet. Der Abschnitt des Abriebbandes 4, der sich im Prüfbereich 5 befindet, ist derart ausgerichtet, dass - solange der Belastungskörper 6 nicht auf das Abriebband 4 einwirkt - die Flächenseiten des Abriebbandes 4 in vertikalen Ebenen parallel und unter Ausbildung eines Spaltes 7 beabstandet von der Oberfläche 202 des Prüflings 201 verlaufen.

Die Abwickelrolle 2 weist eine Drehachse D auf. Die Aufwickelrolle 3 weist eine Drehachse E auf. Die Drehachsen D und E liegen in der Horizontalen und verlaufen parallel zueinander. Die Drehachse E ist von der Drehachse D beabstandet und liegt tiefer als die Drehachse D. Die Abwickelrolle 2 und die Aufwickelrolle 3 können an einem gemeinsamen Gestell jeweils drehbar gelagert sein. Die Abwickelrolle 2 und die Aufwickelrolle 3 können so angeordnet sein, dass sich das Abriebband 4 im Prüfbereich 5 in vertikaler Lage befindet.

Das Abriebband 4 wird zur Prüfung der Oberfläche 202 des Prüfling 201 abschnittsweise von der Abwickelrolle 2 abgewickelt (Pfeil A). Dazu weist die Aufwickelrolle 3 einen Motor (nicht gezeigt) auf. Durch Drehen der Aufwickelrolle 3 in eine erste Richtung (Pfeil B) wird das Abriebband 4 abschnittsweise auf die Aufwickelrolle 3 aufgewickelt. Dabei wird der im Prüfbereich 5 befindliche Abschnitt, vorzugsweise nach dessen Benutzung zur Prüfung der Oberfläche 202, des Abriebbandes 4 aus dem Prüfbereich 5 geführt. Gleichzeit tritt ein neuer, noch unbenutzter Abschnitt des Abriebbandes 4 in den Prüfbereich 5 ein. Sobald der neue, noch unbenutzte Abschnitt des Abriebbandes 4 in den Prüfbereich 5 eingetreten ist, wird das Aufwickeln des Abriebbandes auf die Aufwickelrolle 3 gestoppt. Falls erforderlich, kann jedoch die Spannung des Abriebbandes, eingestellt werden. Dazu wird die Aufwickelrolle 3 in die erste Richtung (Pfeil B) oder in die entgegengesetzte Richtung (Pfeil C) um ihre Drehachse (E) gedreht, bis das Abriebband 4 die vorgegebene Spannung aufweist. Zur Einstellung der Spannung kann die Aufwickelrolle 3 mehrfach in die erste Richtung oder in die zweite Richtung oder alternierend in die eine und dann die andere Richtung gedreht werden.

Befindet sich der neue, noch unbenutzte Abschnitt des Abriebbandes 4 in dem Prüfbereich 5 und weist das Abriebband 4 die vorgegebene Spannung auf, so kann die Prüfung der Oberfläche 202 des Prüflings 201 beginnen. Es kann vorgesehen sein, dass das Abriebband 4 während der Prüfung nicht mittels der Aufwickelrolle 3 bewegt wird.

Die Prüfung kann in der aus dem Stand der Technik bekannten Weise durchgeführt werden. Dazu wirkt der Belastungskörper 6 auf die Flächenseite des Abriebbandes 4, die der Oberfläche 202 des Prüflings 201 abgewandt ist, ein. Dabei kann der Belastungskörper 6 mittels der Antriebseinheit 8 derart bewegt werden, dass er in einem Winkel α in Richtung der Oberfläche 202 bewegt wird und dabei das Abriebband 4 gegen die Oberfläche 202 drückt. Die Antriebseinheit 8 weist einen drehbar gelagerten Zylinder 21 auf, der einen nicht-rotierenden, unidirektional (Doppelpfeil P₁) beweglichen Kolben 22 besitzt und um eine horizontale Achse P schwenkbar (Doppelpfeil P₂) ist. Die Antriebseinheit ermöglicht eine Relativbewegung des Belastungskörpers 6 (Pfeile F₁ und F₂). Der Belastungskörper 6 kann eine schleifende Bewegung, ausschließlich entgegen der Schwerkraft, ausführen. Er kann dabei auf einem definierten Weg, der gegebenenfalls einstellbar ist und als Reibweg bezeichnet wird, bewegt werden. Anschließend kann der Belastungskörper 6 von dem Abriebband 4 weg bewegt werden, wodurch das Abriebband 4 von der Oberfläche 202 gelöst wird. Eine beispielhafte Bewegung des Belastungskörpers 6 ist in Fig. 2B als Trajektorie gezeigt. Die beschriebene Hinbewegung des Belastungskörpers zu der Oberfläche 202 in dem Winkel α, die schleifende Bewegung des Belastungskörpers, während er das Abriebband 4 gegen die Oberfläche 202 drückt, und die anschließende Rückbewegung des Belastungskörpers, wodurch das Abriebband 4 von der Oberfläche 202 gelöst wird, können einen Zyklus bilden. Dieser Zyklus kann mehrfach wiederholt werden. Der Winkel α kann z. B. 45° oder 60° betragen.

Die Belastung der Oberfläche 202 wird für eine vorgegebene Anzahl von Zyklen durchgeführt. Dabei wird der im Prüfbereich 5 befindliche Abschnitt des Abriebbandes 4 nicht gewechselt. Nach Ausführung der vorgegebenen Anzahl von Zyklen wird der nun benutzte Abschnitt des Abriebbandes 4 durch einen neuen unbenutzten Abschnitt ersetzt, indem ein Abschnitt des Abriebbandes auf den Aufwickler 3 aufgewickelt wird. Dieser aufgewickelte Abschnitt hat eine vorgegebene Länge, die als Schublänge bezeichnet wird. Die Schublänge entspricht der Länge des Abriebbandes 4, die aufgewickelt werden muss, damit der neue, unbenutzte Abschnitt in den Prüfbereich 5 gelangt und den Prüfbereich 5 derart einnimmt, dass die Prüfung der Oberfläche 202 nun mit diesem neuen, unbenutzten Abschnitt durchgeführt werden kann. Zur Bestimmung der Schublänge kann ein Positionssensor (nicht gezeigt) vorgesehen sein, mit dem die Position des Aufwicklers bestimmt wird. Auf diese Weise können Positionsdaten erhalten werden, die an eine zentrale oder lokale Steuerungseinrichtung (nicht gezeigt) übermittelt werden. Die Steuerungseinrichtung kann eine Drehung der Aufwickelrolle 3 (Pfeil B) über den Motor bewirken. Zur Einstellung der Spannung des Abriebbandes 4 kann die Steuereinrichtung ferner eine Drehung der Aufwickelrolle 3 in Richtung des Pfeils B oder C bewirken.

Das Abriebband 4 kann entweder trocken oder mit einem Wirkmedium 24 getränkt verwendet werden. Das Wirkmedium 24 kann apparativ oder manuell aufgebracht werden, zum Beispiel über eine Pipette oder mit Hilfe eines Spatels. Bei dem Wirkmedium 24 kann es sich um eine Substanz wie beispielsweise Kunstschweiß, Sonnencreme, Zahnpasta und weitere Substanzen, mit der die Prüfoberfläche bei dem vorgesehenen Einsatz des Prüflings 201 in Kontakt kommen kann, handeln. Das Wirkmedium 24 kann mittels einer Zuleitung 23 zu dem Abriebband 4 geführt werden.

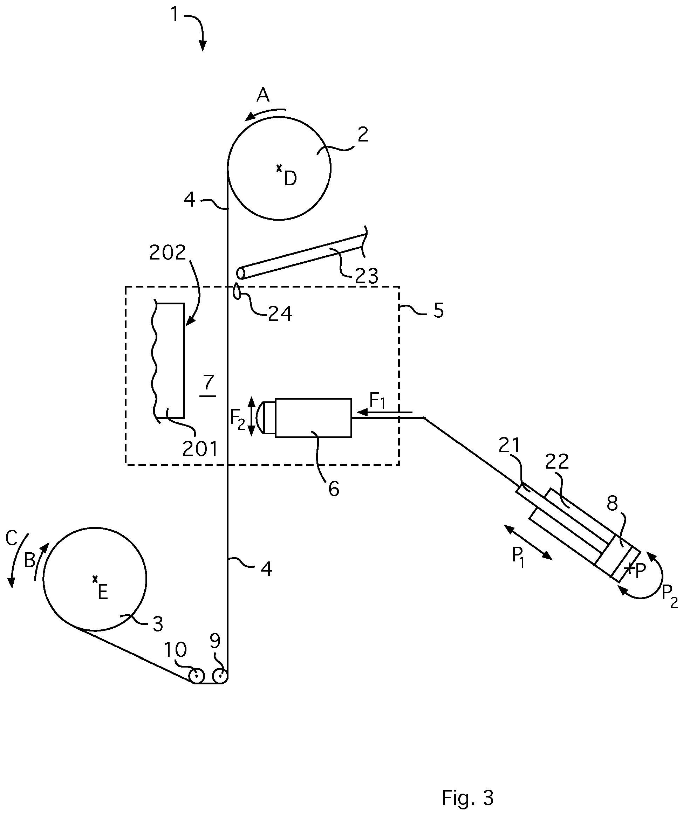

Die in Fig. 3 gezeigte zweite Ausführungsform einer erfindungsgemäßen Prüfvorrichtung 1 entspricht der in Fig. 2A gezeigten ersten Ausführungsform, außer dass zusätzlich zwei Führungsrollen 9, 10 zur Führung des Abriebbandes 4 vorgesehen sind. Die beiden Führungsrollen 9, 10 dienen zur Führung des aus dem Prüfbereich 5 austretenden Abriebbandes 4 zu der Aufwickelrolle 3. Die beiden Führungsrollen weisen horizontale Drehachsen auf, die parallel zu den Drehachsen D, E der Abwickelrolle 2 und der Aufwickelrolle 3 verlaufen. Die beiden Führungsrollen 9, 10 können ebenfalls an dem Gestell, an dem bereits die Abwickelrolle 2 und die Aufwickelrolle 3 drehbar gelagert sind, um ihre Drehachsen drehbar gelagert sein.

Die erste Führungsrolle 9 ist eine Umlenkrolle und ist derart angeordnet, dass das Abriebband 4 in vertikaler Lage durch den Prüfbereich 5 geführt wird. Das kann durch eine entsprechende Anordnung der Führungsrolle 9 zu der Abwickelrolle 2 erreicht werden. Im Gegensatz zur ersten Ausführungsform wird die vertikale Lage des Abriebbandes 4 im Prüfbereich 5 nicht durch die Ausrichtung der Aufwickelrolle 3 zur Abwickelrolle 2 erreicht. Die erste Führungsrolle 9 ist in der in Fig. 3 gezeigten dritten Ausführungsform tiefer als die Aufwickelrolle 3 angeordnet.

Das Abriebband 4 gelangt von der Abwickelrolle 2 durch den Prüfbereich 5 zu der ersten Führungsrolle 9. Von der ersten Führungsrolle 9 wird das Abriebband 4 zu der zweiten Führungsrolle 10 geführt, deren Drehachse in derselben horizontalen Ebene wie die Drehachse der ersten Führungsrolle 9 liegt. Die zweite Führungsrolle 10 dient als Zählrolle. Sie kann als eine Einrichtung zur Bestimmung der Schublänge des Abriebbandes dienen. Mittels der Zählrolle kann die Länge des Abriebbandes bestimmt werden, die auf den Aufwickler aufgewickelt worden ist. Die mittels der Zählrolle bestimmte Länge kann an eine zentrale oder lokale Steuerungseinrichtung (nicht gezeigt) übermittelt werden. Die Steuerungseinrichtung kann eine Drehung der Aufwickelrolle 3 (Pfeil B) über den Motor bewirken. Zur Einstellung der Spannung des Abriebbandes 4 kann die Steuereinrichtung ferner eine Drehung der Aufwickelrolle 3 in Richtung des Pfeils B oder C bewirken. Das Abriebband 4 liegt mit seiner Flächenseite, die der Oberfläche 202 des Prüflings 201 zugewandt ist, sowohl an der ersten Führungsrolle 9 als auch an der zweiten Führungsrolle 10 an.

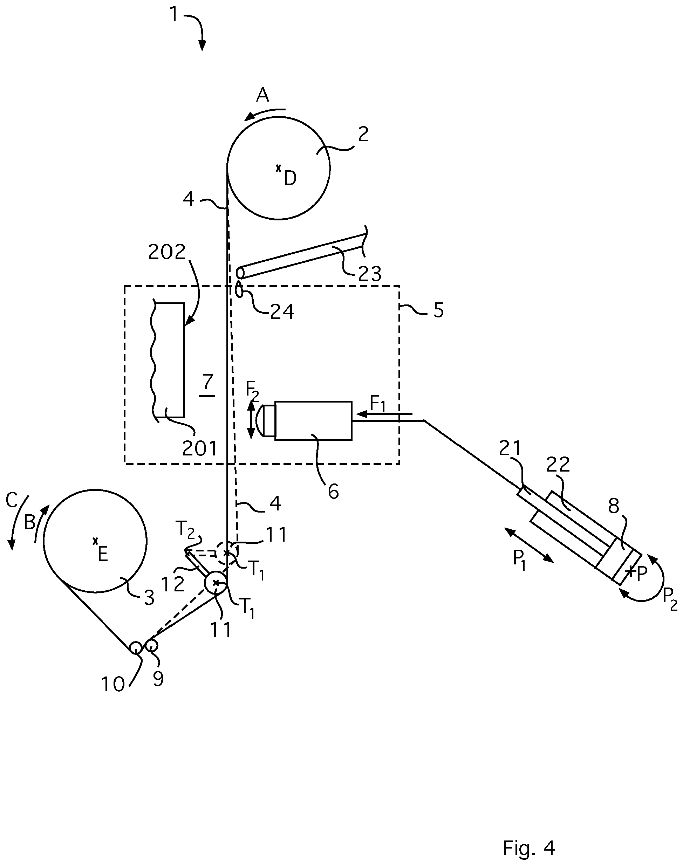

Die in Fig. 4 gezeigte dritte Ausführungsform einer erfindungsgemäßen Prüfvorrichtung 1 entspricht der in Fig. 3 gezeigten zweiten Ausführungsform, außer dass zusätzlich eine Tänzerrolle 11 zur Führung des Abriebbandes 4 vorgesehen ist und das Abriebband 4 durch einen Spalt geführt ist, der zwischen den beiden Führungsrollen 9 und 10 ausgebildet ist. Die Tänzerrolle 11 ist an einer Tänzerrollenhalterung 12 drehbar gelagert befestigt. Die Tänzerrollenhalterung 12 ist um eine Drehachse (T₂) drehbar gelagert, die parallel zur Drehachse (T₁) der Tänzerrolle liegt und von dieser beabstandet ist. Dazu kann die Tänzerrollenhalterung 12 an dem gemeinsamen Gestell drehbar befestigt sein. Die Drehachse (T₁) und die Drehachse (T₂) liegen in der Horizontalen und verlaufen parallel zu den Drehachsen des Abwicklers 2, der Führungsrollen 9 und 10 sowie des Aufwicklers 3.

Die Tänzerrolle 11 ist derart angeordnet, dass das Abriebband 4 in vertikaler Lage durch den Prüfbereich 5 geführt wird, wenn sich die Tänzerrolle 11 in ihrer unteren Position befindet. Das kann durch eine entsprechende Anordnung der Tänzerrolle 11 zu der Abwickelrolle 2 erreicht werden. Im Gegensatz zur zweiten Ausführungsform wird die vertikale Lage des Abriebbandes 4 im Prüfbereich 5 nicht durch die Ausrichtung der ersten Führungsrolle 9 erreicht. In der in Fig. 4 gezeigten Ausführungsform ist die Tänzerrolle 11 oberhalb der ersten Führungsrolle 9 angeordnet.

Das Abriebband 4 gelangt von der Abwickelrolle 2 durch den Prüfbereich 5 zu der Tänzerrolle 11 und von dort zu der ersten Führungsrolle 9, passiert die zweite Führungsrolle 10, die als Zählrolle dient und von der es zum Aufwickler 3 geführt ist. Dabei liegt das Abriebband 4 mit seiner Flächenseite, die der Oberfläche 202 des Prüflings 201 abgewandt ist, an der ersten Führungsrolle 9 und mit seiner Flächenseite, die der Oberfläche 202 des Prüflings 201 zugewandt ist, an der zweiten Führungsrolle 10 an.

Die Tänzerrolle 11 kann zwischen einer unteren Position und einer oberen Position bewegt werden. Die obere Position ist in Fig. 4 durch gestrichelte Linien gezeigt. Zur Überführung der Tänzerrolle 11 von der unteren in die obere Position oder von der oberen in die untere Position wird die Tänzerrolle 11 mittels der Tänzerrollenhalterung 12 um deren Drehachse T₂ geschwenkt. In der unteren Position liegt die Drehachse T₁ der Tänzerrolle 11 in einer ersten horizontalen Ebene und einer ersten vertikalen Ebene. In der oberen Position liegt die Drehachse T₁ der Tänzerrolle 11 in einer zweiten horizontalen Ebene, die von der ersten horizontalen Ebene beabstandet ist und oberhalb der ersten horizontalen Ebene liegt, und in einer zweiten vertikalen Ebene, die von der ersten vertikalen Ebene beabstandet ist. Der Abstand zwischen der Drehachse T₁ der Tänzerrolle 11 und der Drehachse T₂ der Tänzerrollenhalterung 12 bleibt bei der Schwenkung unverändert.

Die Prüfvorrichtung 1 kann eine Einstelleinrichtung (nicht gezeigt) zur Einstellung der Straffungskraft, die der Tänzer 11 auf das Abriebband 4 ausübt, aufweisen. Mittels der Einstelleinrichtung ist eine Straffungskraft voreingestellt, die den Tänzer in seiner unteren Position halten soll. Die Straffungskraft wird mittels der Einstelleinrichtung auf die Tänzerrollenhalterung 12 ausgeübt.

Die erfindungsgemäße Prüfvorrichtung weist eine Erfassungseinrichtung (nicht gezeigt) zur Erfassung der Position der Tänzerrolle 11 auf. Wird mittels der Erfassungseinrichtung festgestellt, dass die Tänzerrolle 11 die untere Position aus irgendeinem Grund nicht erreicht, so kann vorgesehen sein, dass die Prüfung der Oberfläche 202 des Prüflings 201 angehalten wird, da sonst eine Falschprüfung erfolgen würde und/oder kein weiteres Abriebband 4 von der Abwickelrolle 2 abgewickelt werden kann, womit das Ende des Abriebbandes 4 erreicht ist. Bei der Erfassungseinrichtung handelt es sich um einen Positionssensor, der die Position der Tänzerrolle 11 erfasst und an eine Steuerungseinrichtung weitergibt.

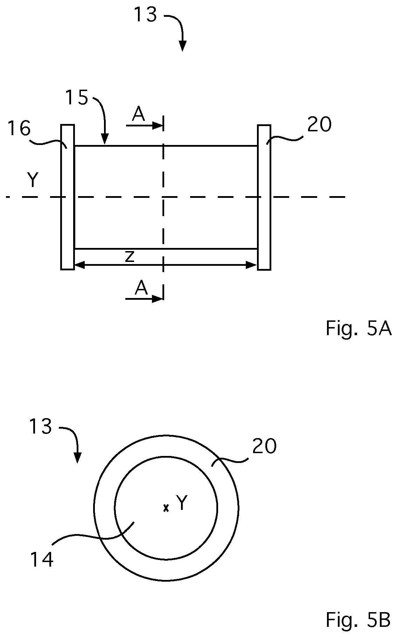

In den Figuren 5A und 5B ist eine Rolle 13 gezeigt, bei der es sich um eine Führungsrolle, ein Abwickelrolle, eine Aufwickelrolle und eine Tänzerrolle handeln kann. Die Rolle 13 weist einen Welle 14 mit einer Drehachse Y und einem Mantel 15 auf. Die Rolle 13 weist außerdem zwei Führungselemente 20 auf, die, bezogen auf die Drehachse Y, um einen Abstand z voneinander beabstandet sind. Der Abstand z ist dabei an die Breite des Abriebbandes 4 angepasst, so dass eine Bewegung des Abriebbandes axial zur Drehachse Y der Welle verhindert wird. Der Abstand z zwischen den beiden Führungselementen 20 kann variiert werden, beispielsweise indem ein oder beide Führungselementen 20 auf der Welle 14 verschoben werden oder indem die Länge der Welle 14 verändert wird.

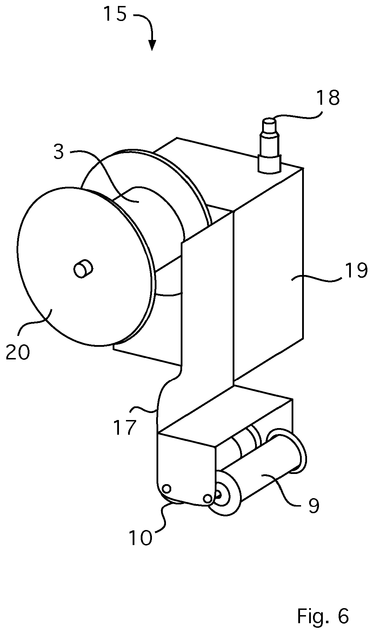

Fig. 6 zeigt ein Modul 16, in dem der Aufwickler 3, die erste Führungsrolle 9 und die zweite Führungsrolle an einem Gestell 17 befestigt sind. Die Aufwickelrolle 3, die erste Führungsrolle 9 und die zweite Führungsrolle entsprechen der in Fig. 3 gezeigten zweiten Ausführungsform der Prüfvorrichtung 1 und werden zur Aufwicklung des Abriebbandes 4 nach Verlassen des Prüfbereiches 5 benötigt. Das Modul 16 kann ferner den Motor zum Drehen der Aufwickelrolle 3 und zumindest eine Einrichtung zur Erfassung der Schublänge des Abriebbandes 4 aufweisen, die in einem an dem Gestell 17 befestigten Gehäuse 19 angeordnet sind. Das Gehäuse 19 ist ebenfalls ein Bestandteil des Moduls 16.

Das Modul 16 kann zur Nachrüstung vorhandener Prüfgeräte dienen. Zur Stromversorgung des Moduls 16 und zum Datenaustausch zwischen elektronischen Komponenten des Moduls 16 mit einer Steuereinrichtung weist das Modul 16 einen Anschluss 18 auf.

### Bezugszeichenliste

- 1: Prüfvorrichtung
- 2: Abwickelrolle
- 3: Aufwickelrolle
- 4: Abriebband
- 5: Prüfbereich
- 6: Belastungskörper
- 7: Spalt
- 8: Antriebseinheit
- 9: erste Führungsrolle
- 10: zweite Führungsrolle
- 11: Tänzer
- 12: Tänzerrollenhalterung
- 13: Rolle
- 14: Welle
- 15: Mantel
- 16: Modul
- 17: Gestell
- 18: Anschluss
- 19: Gehäuse
- 20: Führungselement
- 21: Zylinder
- 22: Kolben
- 23: Zuleitung
- 24: Wirkmedium

- 101: Prüfgerät
- 102: Belastungskörper
- 103: Antriebseinheit
- 104: Abriebband
- 105: Wirkmedium
- 106: Zuleitung
- 107: Gewicht

- 201: Prüfling
- 202: Prüfoberfläche

- 301: Finger

## Patentansprüche

1. Prüfvorrichtung (1) zum Prüfen einer Oberfläche (202) eines Prüflings (201) unter Verwendung eines Abriebbandes (4) und eines Belastungskörpers (6), wobei die Prüfvorrichtung das Abriebband (4), den Belastungskörper (6), eine Bereitstellungseinrichtung (2), einen Prüfbereich (5), einen Aufwickler (3) und eine Steuerungseinrichtung zur Steuerung der Prüfvorrichtung (1) aufweist, **dadurch gekennzeichnet, dass** das Abriebband (4) abschnittsweise von der Bereitstellungseinrichtung (2) unter Passieren des Prüfbereiches (5), in dem das Abriebband (4) in Kontakt mit der Oberfläche (202) des Prüflings (201) unter Einwirkung des Belastungskörpers (6) auf das Abriebband (4) gebracht werden kann, zu dem Aufwickler (3) geführt ist, wobei der Aufwickler (3) einen Antrieb zur Bewegung des Abriebbandes (4) mittels des Aufwicklers (3) aufweist und die Steuerungseinrichtung eine Drehung des Aufwicklers (3) über den Antrieb bewirkt, wobei das Abriebband (4) nur dann in Kontakt mit der Oberfläche (202) des Prüflings (201) gebracht wird, wenn der Transport des Abriebbandes (4) von der Bereitstellungseinrichtung (2) zu dem Aufwickler (3) unterbrochen ist, und wobei sich das Abriebband (4) nicht in Kontakt mit der Oberfläche (202) des Prüflings (201) befindet, wenn das Abriebband (4) von der Bereitstellungseinrichtung (2) zu dem Aufwickler (3) transportiert wird.

2. Prüfvorrichtung nach Anspruch 1, **dadurch gekennzeichnet, dass** der Antrieb ein Wickelmotor zum Drehen des Aufwicklers (3) unter Auf- oder Abwicklung des Abriebbandes (4) ist.

3. Prüfvorrichtung nach einem der vorstehenden Ansprüche, **dadurch gekennzeichnet, dass** sie eine Einrichtung zur Bestimmung der Schublänge des Abriebbandes (4) aufweist.

4. Prüfvorrichtung nach einem der vorstehenden Ansprüche, **dadurch gekennzeichnet, dass** sie ferner eine oder mehrere Führungsrollen (9, 10) aufweist, die zwischen dem Prüfbereich (5) und dem Aufwickler (3) angeordnet sind.

5. Prüfvorrichtung nach einem der vorstehenden Ansprüche, **dadurch gekennzeichnet, dass** sie ferner einen Tänzer (11) aufweist, der zwischen einer oberen Position und einer unteren Position beweglich ist.

6. Prüfvorrichtung nach Anspruch 5, **dadurch gekennzeichnet, dass** sie eine Einstelleinrichtung zur Einstellung der Straffungskraft, die der Tänzer (11) auf das Abriebband ausübt, aufweist, wobei mittels der Einstelleinrichtung eine Straffungskraft voreingestellt ist, die den Tänzer (11) in seiner unteren Position halten soll.

7. Prüfvorrichtung nach Anspruch 5 oder Anspruch 6, **dadurch gekennzeichnet, dass** sie eine Erfassungseinrichtung zur Erfassung der Position des Tänzers (11) aufweist.

8. Prüfvorrichtung nach Anspruch 7, **dadurch gekennzeichnet, dass** die Erfassungseinrichtung ein Sensor oder ein Schalter ist.

9. Prüfvorrichtung nach einem der Ansprüche 5 bis 8, **dadurch gekennzeichnet, dass** der Tänzer (11) eine Tänzerrolle ist, die an einer Tänzerrollenhalterung (12) um eine Drehachse (T₁) drehbar gelagert ist.

10. Prüfvorrichtung nach Anspruch 9, **dadurch gekennzeichnet, dass** die Tänzerrollenhalterung um eine Drehachse (T₂) drehbar gelagert ist, die parallel zur Drehachse (T₁) der Tänzerrolle (11) und von dieser beabstandet ist.

11. Prüfungsvorrichtung nach einem der Ansprüche 5 bis 10, **dadurch gekennzeichnet, dass** der Tänzer (11) in seiner unteren Position in einer ersten vertikalen Ebene und in seiner oberen Position in einer zweiten vertikalen Ebene liegt, die von der ersten vertikalen Ebene beabstandet ist.

12. Prüfvorrichtung nach einem der Ansprüche 5 bis 11, **dadurch gekennzeichnet, dass** der Tänzer (11) eine Zählrolle (10) ist, oder nach Anspruch 4, **dadurch gekennzeichnet, dass** zumindest eine der Führungsrollen (9, 10) eine Zählrolle ist.

13. Prüfvorrichtung nach einem der Ansprüche 5 bis 12, **dadurch gekennzeichnet, dass** der Tänzer (11) seitliche Führungselemente (20) aufweist, die eine Bewegung des Abriebbandes (4) in axialer Richtung, bezogen auf die Drehachse des Tänzers (11), verhindern.

14. Verfahren zum Prüfen einer Oberfläche (202) eines Prüflings (201) unter Verwendung einer Prüfvorrichtung (1) gemäß einem der Ansprüche 1 bis 13, **dadurch gekennzeichnet, dass** ein Abriebband (4) abschnittsweise von einer Bereitstellungseinrichtung (2) unter Passieren eines Prüfbereiches (5), in dem das Abriebband (4) in Kontakt mit der Oberfläche (202) des Prüflings (201) unter Einwirkung eines Belastungskörpers (6) auf das Abriebband (4) gebracht wird, zu einem Aufwickler (3) geführt wird, wobei das Abriebband (4) mittels eines Antriebs, der den Aufwickler (3) antreibt, bewegbar ist.

15. Verfahren nach Anspruch 14, **dadurch gekennzeichnet, dass** durch Drehen des Aufwicklers (3) die Spannung des Abriebbandes (4) verändert wird.

## Claims

1. A testing device (1) for testing a surface (202) of a specimen (201) using an abrasion ribbon (4) and a load body (6), wherein the testing device has the abrasion ribbon (4), the load body (6), a provision apparatus (2), a testing area (5), a winder (3), and a control apparatus for controlling the testing device (1), **characterized in that** the abrasion ribbon (4) is guided in sections from the provision apparatus (2) through the testing area (5), where the abrasion ribbon (4) can be brought into contact with the surface (202) of the specimen (201) under the action of the load body (6) on the abrasion ribbon (4), to the winder (3), wherein the winder (3) has a drive for moving the abrasion ribbon (4) by means of the winder (3) and the control apparatus causes rotation of the winder (3) via the drive, wherein the abrasion ribbon (4) is only brought into contact with the surface (202) of the specimen (201) when the transportation of the abrasion ribbon (4) from the provision apparatus (2) to the winder (3) is interrupted, and wherein the abrasion ribbon (4) is not in contact with the surface (202) of the specimen (201) when the abrasion ribbon (4) is transported from the provision apparatus (2) to the winder (3).

2. The testing device according to claim 1, **characterized in that** the drive is a winding motor for rotating the winder (3) to wind or unwind the abrasion ribbon (4).

3. The testing device according to any of the preceding claims, **characterized in that** it is an apparatus for determining the feed length of the abrasion ribbon (4).

4. The testing device according to any of the preceding claims, **characterized in that** it further has one or more guide rolls (9, 10) that are arranged between the testing area (5) and the winder (3).

5. The testing device according to any of the preceding claims, **characterized in that** it further has a dancing bar (11) which can be moved between an upper position and a lower position.

6. The testing device according to claim 5, **characterized in that** it has an adjusting apparatus for adjusting the tensioning force exerted by the dancing bar (11) on the abrasion ribbon, wherein a tensioning force is pre-set by means of the adjusting apparatus that is to hold the dancing bar (11) in its lower position.

7. The testing device according to claim 5 or claim 6, **characterized in that** it has a detecting apparatus for detecting the position of the dancing bar (11).

8. The testing device according to claim 7, **characterized in that** the detecting apparatus is a sensor or a switch.

9. The testing device according to any of claims 5 to 8, **characterized in that** the dancing bar (11) is a dancing bar roll that is rotatably mounted about a rotational axis (T₁) on a dancing bar roll holder (12).

10. The testing device according to claim 9, **characterized in that** the dancing bar roll holder is rotatably mounted about a rotational axis (T₂) that is in parallel to the rotational axis (T₁) of the dancing bar roll (11) and spaced apart from it.

11. A testing device according to any of claims 5 to 10, **characterized in that** the dancing bar (11) in its lower position is located in a first vertical plane and in its upper position in a second vertical plane that is spaced apart from the first vertical plane.

12. The testing device according to any of claims 5 to 11, **characterized in that** the dancing bar (11) is a counting roll (10), or according to claim 4, **characterized in that** at least one of the guide rolls (9, 10) is a counting roll.

13. The testing device according to any of claims 5 to 12, **characterized in that** the dancing bar (11) has lateral guiding elements (20) which prevent movement of the abrasion ribbon (4) in an axial direction with respect to the rotational axis of the dancing bar (11).

14. A method for testing a surface (202) of a specimen (201) using a testing device (1) according to any of claims 1 to 13, **characterized in that** an abrasion ribbon (4) is guided in sections from the provision apparatus (2) through the testing area (5), where the abrasion ribbon (4) is brought into contact with the surface (202) of the specimen (201) under the action of the load body (6) on the abrasion ribbon (4), to a winder (3), wherein the abrasion ribbon (4) can be moved by means of a drive driving the winder (3).

15. The method according to claim 14, **characterized in that** the tension of the abrasion ribbon (4) is changed by rotating the winder (3).

## Revendications

1. Dispositif de test (1) pour contrôler une surface (202) d'un échantillon d'essai (201) en utilisant une bande d'abrasion (4) et un corps de charge (6), le dispositif de test présentant la bande d'abrasion (4), le corps de charge (6), un dispositif de déploiement (2), une zone de test (5), un enrouleur (3) et un dispositif de commande pour commander le dispositif de test (1), **caractérisé en ce que** la bande d'abrasion (4) est menée par section par le dispositif de déploiement (2), en franchissant la zone d'essai (5), dans laquelle la bande d'abrasion (4) peut être mise en contact avec la surface (202) de l'échantillon d'essai (201) sous l'effet du corps de charge (6) sur la bande d'abrasion (4) , jusqu'à l'enrouleur (3) , l'enrouleur (3) présentant un entraînement servant à déplacer la bande d'abrasion (4) au moyen de l'enrouleur (3) et le dispositif de commande entraîne une rotation de l'enrouleur (3) via l'entraînement, la bande d'abrasion (4) n'étant mise en contact avec la surface (202) de l'échantillon d'essai (201) que lorsque le transport de la bande d'abrasion (4) est interrompu du dispositif de déploiement (2) à l'enrouleur (3), et la bande d'abrasion (4) ne se trouvant pas en contact avec la surface (202) de l'échantillon d'essai (201), lorsque la bande d'abrasion (4) est transportée par le dispositif de déploiement (2) jusqu'à l'enrouleur (3).

2. Dispositif de test selon la revendication 1, **caractérisé en ce que** l'entraînement est un moteur enrouleur pour faire tourner l'enrouleur (3) en enroulant ou en déroulant la bande d'abrasion (4).

3. Dispositif de test selon l'une des revendications précédentes, **caractérisé en ce qu'**il présente un dispositif servant à déterminer la longueur d'avancée de la bande d'abrasion (4).

4. Dispositif de test selon l'une des revendications précédentes, **caractérisé en ce qu'**il présente par ailleurs un ou plusieurs galets de guidage (9, 10), qui sont disposés entre la zone de test (5) et l'enrouleur (3).

5. Dispositif de test selon l'une des revendications précédentes, **caractérisé en ce qu'**il présente par ailleurs un danseur (11), qui est mobile entre une position supérieure et une position inférieure.

6. Dispositif de test selon la revendication 5, **caractérisé en ce qu'**il présente un dispositif de réglage pour le réglage d'une force de tension que le danseur (11) exerce sur la bande d'abrasion, une force de tension, censée maintenir le danseur (11) dans sa position inférieure, étant préréglée au moyen du dispositif de réglage.

7. Dispositif de test selon la revendication 5 ou la revendication 6, **caractérisé en ce qu'**il présente un dispositif de détection pour la détection de la position du danseur (11).

8. Dispositif de test selon la revendication 7, **caractérisé en ce que** le dispositif de détection est un capteur ou un commutateur

9. Dispositif de test selon l'une des revendications 5 à 8, **caractérisé en ce que** le danseur (11) est un rouleau libre, qui est monté sur un support de rouleau libre (12) de façon à pouvoir tourner sur un axe de rotation (T₁).

10. Dispositif de test selon la revendication 9, **caractérisé en ce que** le support de rouleau libre est monté de façon à pouvoir tourner sur un axe de rotation (T₂), qui est parallèle à l'axe de rotation (T₁) du rouleau libre (11) et à une certaine distance de ce dernier.

11. Dispositif de test selon l'une des revendications 5 à 10, **caractérisé en ce que** le danseur (11) dans sa position inférieure se trouve dans un premier plan vertical et dans sa position supérieure dans un second plan vertical, qui est espacé du premier plan vertical.

12. Dispositif de test selon l'une des revendications 5 à 11, **caractérisé en ce que** le danseur (11) est un rouleau de comptage (10), ou selon la revendication 4, **caractérisé en ce qu'**aucun moins l'un des galets de guidage (9, 10) est un rouleau de comptage.

13. Dispositif de test selon l'une des revendications 5 à 12, **caractérisé en ce que** le danseur (11) présente des éléments de guidage latéraux (20), qui empêchent le déplacement de la bande d'abrasion (4) dans le sens axial par rapport à l'axe de rotation du danseur (11).

14. Procédé pour vérifier une surface (202) d'un échantillon d'essai (201) en utilisant un dispositif de test (1) selon l'une des revendications 1 à 13, **caractérisé en ce qu'**une bande d'abrasion (4) menée par section par un dispositif de déploiement (2) en franchissant une zone d'essai (5), dans laquelle la bande d'abrasion (4) est mise en contact avec la surface (202) de l'échantillon d'essai (201) sous l'effet d'un corps de charge (6) sur bande d'abrasion (4), jusqu'à un enrouleur (3), la bande d'abrasion (4) pouvant être déplacée au moyen d'un entraînement qui entraîne (3) l'enrouleur.

15. Procédé selon la revendication 14, **caractérisé en ce que** la tension de la bande d'abrasion (4) est modifiée par la rotation de l'enrouleur (3).
